(19) Europäisches Patentamt
European Patent Office
Office européen des brevets

(11) **EP 3 712 657 B1**

(12) **FASCICULE DE BREVET EUROPEEN**

(45) Date de publication et mention de la délivrance du brevet:
**23.11.2022 Bulletin 2022/47**

(21) Numéro de dépôt: **20163593.5**

(22) Date de dépôt: **17.03.2020**

(51) Classification Internationale des Brevets (IPC):
*G01S 13/91* *(2006.01)*   *G01S 13/86* *(2006.01)*
*G01S 13/00* *(2006.01)*   *G01S 13/89* *(2006.01)*
*H01Q 1/28* *(2006.01)*

(52) Classification Coopérative des Brevets (CPC):
**G01S 13/913; G01S 13/003; G01S 13/867;**
**G01S 13/89; H01Q 1/281; H01Q 1/286**

(54) **SYSTÈME DE VISION AMÉLIORÉE D'AÉRONEF, AÉRONEF ET PROCÉDÉ DE VISION ASSOCIÉS**

VERBESSERTES SICHTSYSTEM FÜR LUFTFAHRZEUG, ENTSPRECHENDES LUFTFAHRZEUG UND SICHTVERFAHREN

IMPROVED VIEWING SYSTEM FOR AN AIRCRAFT, ASSOCIATED AIRCRAFT AND VIEWING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.03.2019 FR 1902748**

(43) Date de publication de la demande:
**23.09.2020 Bulletin 2020/39**

(73) Titulaire: **Dassault Aviation**
**75008 Paris (FR)**

(72) Inventeurs:
• **LEFLOUR, Gérard**
  **92214 SAINT CLOUD (FR)**
• **LAGARDE, Jérôme**
  **92214 SAINT CLOUD (FR)**
• **SOUDAIS, Paul**
  **92214 SAINT CLOUD (FR)**
• **MOULIN, Nicolas**
  **92214 SAINT CLOUD (FR)**

(74) Mandataire: **Lavoix**
**2, place d'Estienne d'Orves**
**75441 Paris Cedex 09 (FR)**

(56) Documents cités:
**FR-A1- 2 996 522    US-A1- 2018 284 222**
**US-B1- 8 570 210**

• **RANKIN G A ET AL: "Radar imaging: Conventional and MIMO", COMMUNICATIONS AND ELECTRONICS (ICCE), 2012 FOURTH INTERNATIONAL CONFERENCE ON, IEEE, 1 août 2012 (2012-08-01), pages 171-176, XP032245515, DOI: 10.1109/CCE.2012.6315892 ISBN: 978-1-4673-2492-2**
• **TOSPANN F-J ET AL: "MULTIFUNCTION 35 GHZ FMCW RADAR WITH FREQUENCY SCANNING ANTENNA FORSYNTHETIC VISION APPLICATIONS", VISUAL COMMUNICATIONS AND IMAGE PROCESSING; 20-1-2004 - 20-1-2004; SAN JOSE,, vol. 2463, 17 avril 1995 (1995-04-17), pages 28-37, XP000198257, DOI: 10.1117/12.212752 ISBN: 978-1-62841-730-2**

## Description

La présente invention concerne un système de vision améliorée d'aéronef selon le préambule de la revendication 1.

L'article RANKIN G A ET AL: "Radar imaging: Conventional and MIMO", COMMUNICATIONS AND ELECTRONICS (ICCE), 2012 FOUFITH INTERNATIONAL CONFERENCE ON, IEEE, 1 août 2012 pages 171-176 décrit un système de vision du type précité.

L'invention s'applique aux aéronefs utilisés dans l'aviation civile, en particulier dans l'aviation d'affaires.

Un tel système est destiné notamment à fournir à l'équipage de l'aéronef, durant les phases d'approche ou de roulage à visibilité faible ou nulle, une vision améliorée de l'environnement situé en regard de l'aéronef. Le système est destiné en particulier à obtenir une image du terrain et notamment d'une piste d'atterrissage, lors de l'approche de l'aéronef vers la piste d'atterrissage, ou/et un affichage de caractéristiques de la piste d'atterrissage, telles que son contour, son axe ou/et son seuil, positionnés par rapport à l'aéronef.

Les aéronefs évoluent fréquemment dans des conditions météorologiques dégradées, qui incluent des nuages bas, du brouillard, ou/et de la pluie.

Des systèmes de guidage de l'aéronef installés au sol existent pour permettre à l'équipage de rejoindre une piste d'atterrissage, y compris dans des conditions de visibilité fortement dégradées. Mais du fait du coût d'acquisition et de possession de ce type de système, un faible nombre de pistes d'atterrissage en sont dotés.

Une alternative aux systèmes de guidage est un système de vision, utilisant un ou plusieurs capteurs, embarqué(s) sur l'aéronef, permettant au pilote de visualiser la piste avec suffisamment de préavis pour prendre la décision de poursuivre l'approche à faible altitude jusqu'à l'atterrissage. Le système de vision est par ailleurs utile pour le pilote en vue d'appréhender le terrain situé au voisinage de la piste.

Ces systèmes de vision sont généralement dénommés « système de vision améliorée en vol » (« Enhanced Flight Vision System » ou « EFVS » en anglais).

Les systèmes de vision améliorée connus utilisent par exemple des capteurs optroniques dans des bandes visibles et infrarouges. Ces systèmes sont généralement aptes à produire une image de bonne qualité pour l'équipage. Cependant, dans certaines conditions particulièrement dégradées, notamment en présence d'un brouillard dense ou/et d'un plafond nuageux bas, les systèmes optiques présentent des performances limitant leur exploitation par l'équipage.

Par ailleurs, les aéronefs sont généralement équipés de radars météorologiques à antennes à balayage mécanique.

Ces radars présentent une résolution angulaire trop faible pour l'obtention d'une image de qualité suffisante pour mener en sécurité les approches dans des conditions de visibilité dégradée. L'amélioration de la résolution nécessiterait d'augmenter significativement la taille de l'antenne, ce qui serait alors incompatible d'une intégration sur l'aéronef. Par ailleurs, le principe de balayage mécanique de ces radars offre une cadence de rafraichissement de l'image trop basse, du fait de l'inertie mécanique de l'antenne lors du changement de sens de balayage.

Des radars ou radiomètres fonctionnant à des fréquences d'émission plus élevées que les radars météorologiques (comme les bandes Ka ou W par exemple) peuvent être plus compacts. Cependant, ces capteurs ne sont pas capables d'assurer les fonctions réalisées par les radars météorologiques, ces derniers doivent donc être conservés à bord de l'aéronef. Les capteurs à fréquence d'émission plus élevés existants posent donc également des problèmes d'intégration, du fait du manque d'emplacement disponible sur l'aéronef. A cela s'ajoute la difficulté de conception d'un radôme à la fois transparent dans ces bandes de fréquence et présentant les propriétés mécaniques et aérodynamiques nécessaires pour son intégration sur un aéronef.

Un but de l'invention est d'offrir un système de vision améliorée qui présente une portée et une résolution adéquate pour observer une piste d'atterrissage en approche, même dans des conditions météorologiques très dégradées, le système présentant un encombrement réduit, une cadence de rafraichissement élevée, et peu ou pas de pièces mobiles.

A cet effet, l'invention a pour objet un système de vision améliorée selon la revendication 1.

Le système selon l'invention peut comprendre l'une ou plusieurs des caractéristiques des revendications 2 à 12 ou une des caractéristiques suivantes, prise(s) isolément ou suivant toute combinaison techniquement possible :

- le ou chaque réseau d'émetteurs/récepteurs virtuels est continu ;
- l'image du terrain reconstituée par l'unité de traitement définit un contour d'une piste d'atterrissage.

L'invention a également pour objet un aéronef selon la revendication 13.

L'aéronef selon l'invention peut comprendre la caractéristique suivante :

- le capteur électromagnétique est dépourvu de pièces mobiles.

L'invention a également pour objet un procédé de vision améliorée selon la revendication 14.

L'invention sera mieux comprise à la lecture de la description qui va suivre, donnée uniquement à titre d'exemple, et faite en se référant aux dessins annexés, sur lesquels :

[Fig 1] la figure 1 est une vue de face d'un premier aéronef équipé d'un système de vision améliorée selon l'invention ;

[Fig 2] la figure 2 est une vue de côté de l'aéronef de la figure 1 ;

[Fig 3] la figure 3 est une vue de face illustrant les lignes d'émetteurs, la ligne de récepteurs, et le réseau d'émetteurs/récepteurs virtuels du capteur électromagnétique du système selon l'invention ;

[Fig 4] la figure 4 illustre schématiquement l'ensemble de génération de forme d'onde des émetteurs et l'ensemble de capture des signaux reçus par les récepteurs ;

[Fig 5] la figure 5 est une vue de la fréquence de modulation des signaux d'émission de chaque émetteur en fonction du temps pour une période d'émission de chaque signal d'une première forme d'onde ;

[Fig 6] la figure 6 est une vue du principe de mesure du retard du signal reçu après réflexion par rapport au signal émis ;

[Fig 7] la figure 7 est une vue schématique en perspective d'un aéronef équipé d'un autre système de vision améliorée selon l'invention ;

[Fig 8] la figure 8 est une vue d'un détail de la figure 3 illustrant des détails du réseau d'émetteurs/récepteurs virtuels du capteur électromagnétique du système selon l'invention ;

[Fig 9] la figure 9 est une vue analogue à la figure 5 d'une deuxième forme d'onde ;

[Fig 10] la figure 10 est une vue analogue à la figure 3 d'une variante de capteur électromagnétique.

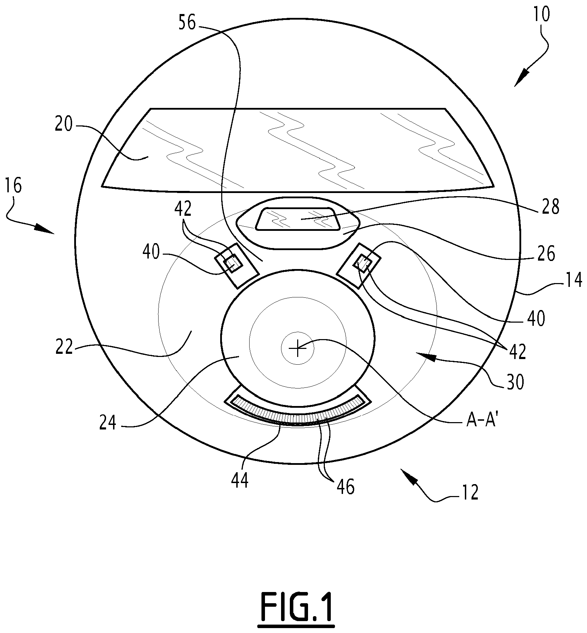

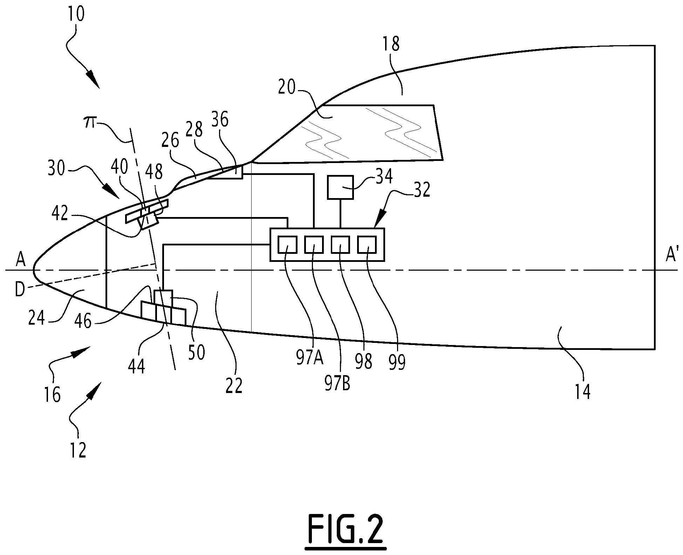

Un aéronef 10, muni d'un système de vision améliorée 12 selon l'invention, est illustré schématiquement sur les figures 1 et 2.

L'aéronef 10 comporte un fuselage 14 présentant à l'avant une pointe avant 16 située en amont d'un cockpit 18 de l'aéronef.

Le cockpit 18 comporte d'une manière connue un pare-brise 20 permettant aux membres d'équipage d'observer à l'extérieur de l'aéronef.

La pointe avant 16 comporte, à l'avant du pare-brise 20, un cône avant composé d'une région intermédiaire 22 sensiblement tronconique et d'un radome 24 obturant la région intermédiaire 22 à l'extrémité avant de l'aéronef 10.

Le radome 24 est réalisé en un matériau transparent aux ondes électromagnétiques aux fréquences correspondant à un radar météorologique.

La région intermédiaire 22 est par exemple réalisée en métal. Elle délimite dans cet exemple un renfoncement 26 fermé à l'arrière par une vitre 28.

Le renfoncement 26 est par exemple tel que décrit dans la demande française FR 2 996 522 de la Demanderesse.

Le système de vision 12 est destiné à offrir à l'équipage de l'aéronef, une vision améliorée de l'environnement à l'avant de l'aéronef. En particulier, le système de vision 12 est destiné à fournir une image du terrain situé à l'avant et plus bas que de l'aéronef 10. L'image illustre l'aspect réel du terrain, notamment d'une piste d'atterrissage et du sol autour de la piste d'atterrissage. A cet effet, la résolution angulaire de l'image obtenue est par exemple comprise entre 0,2° et 1,2°.

En particulier, le système de vision 12 est apte à observer un terrain situé avantageusement à une distance inférieure à 5000 m de l'aéronef, sur un gisement compris entre -20° et + 20°, pris par rapport à une direction centrale d'observation D.

Le terrain est par exemple un terrain d'aviation sur lequel l'aéronef s'apprête à atterrir ou sur lequel l'aéronef roule au sol, avec les obstacles qu'il comporte.

Le système de vision 12 comporte un capteur électromagnétique 30 propre à émettre des signaux électromagnétiques vers le terrain et à recueillir les signaux réfléchis à partir du terrain, une unité de traitement 32 propre à traiter les signaux réfléchis pour former une carte de réflectivité du terrain situé en regard, et un afficheur 34, destiné à afficher en temps réel une image du terrain formée par l'unité de traitement 32 à partir de la carte de réflectivité, ou/et des informations obtenues à partir de la carte de réflectivité reconstituée par l'unité de traitement 32, sur la base des données reçues du capteur électromagnétique 30.

Avantageusement, le système de vision 12 comporte en outre un capteur optique 36 raccordé à l'unité de traitement 32 et à l'afficheur 34. L'ensemble de capteurs optiques 36 opère avantageusement dans le domaine visible et/ou proche infra-rouge et/ou infra-rouge.

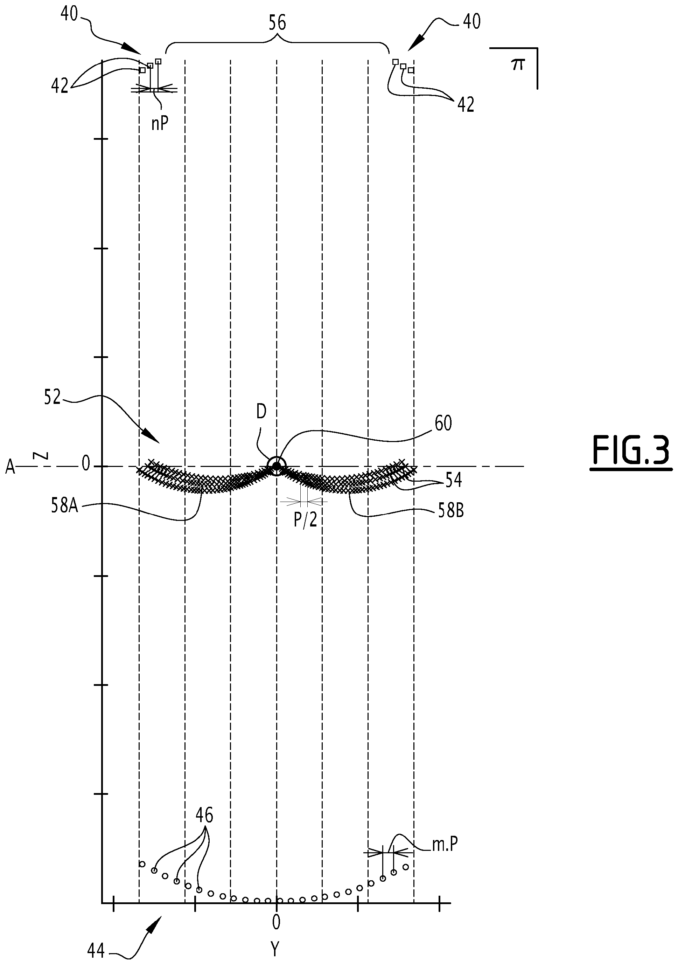

En référence aux figures 1 et 3, le capteur électromagnétique 30 comporte au moins un groupe d'émetteurs 42 d'un signal électromagnétique, en particulier une ligne 40 d'émetteurs 42 d'un signal électromagnétique destiné à être envoyé vers le terrain, et au moins un groupe de récepteurs 46, en particulier une ligne 44 de récepteurs 46, les récepteurs 46 étant destinés à recevoir les signaux réfléchis sur le terrain, les émetteurs 42 étant situés à l'écart des récepteurs 46.

Les lignes 40, 44 sont formées dans un plan π transversal sensiblement perpendiculaire à l'axe avion A-A' (voir figure 2), par exemple formant un angle compris entre 75° et 90 ° avec l'axe avion A-A'. La direction centrale d'observation D est perpendiculaire au plan π.

Le capteur électromagnétique 30 comporte en outre un ensemble 48 de génération de forme d'onde, propre à alimenter simultanément chaque émetteur 42, et un ensemble 50 de capture du signal reçu par chaque récepteur 46, après réflexion sur le terrain.

Selon l'invention, en référence à la figure 3, les émetteurs 42 sont distincts et espacés des récepteurs 46. Les émetteurs 42 et les récepteurs 46 sont agencés pour engendrer, à partir de chaque combinaison formée d'un émetteur 42 et d'un récepteur 46, un réseau continu d'émetteurs/récepteurs virtuels 54 s'étendant entre le groupe d'émetteurs 42 et le groupe de récepteurs 46, suivant une direction d'allongement A transverse à la direction d'observation D. La direction d'allongement A est perpendiculaire à la direction d'observation D et est horizontale lorsque l'axe avion A-A' est horizontal, les ailes étant à plat.

De préférence, les émetteurs 42 sont agencés suivant un premier pas n.P sur chaque ligne 40, les récepteurs 46 étant agencés suivant un deuxième pas m.P sur la ligne 44, les pas n.P et m.P étant mesurés en projection sur la direction d'allongement A.

Ceci engendre au moins une ligne ou une pseudo ligne 52 d'émetteurs/récepteurs virtuels 54 de pas P/2 entre chaque ligne 40 d'émetteurs 42 et chaque ligne 44 de récepteurs 46. Les nombres n et m sont des nombres entiers premiers entre eux, par exemple 3 et 5 ou encore 2 et 3 ou 3 et 2.

Le pas P/2 est une distance généralement inférieure à la longueur d'onde du signal émis, notamment comprise entre 0,4 fois et 0,6 fois la longueur d'onde du signal émis.

Chaque émetteur 42 est par exemple constitué d'une antenne élémentaire affleurant la peau de la région intermédiaire 22, dépourvue de mécanisme d'escamotage. Chaque antenne élémentaire émet en rasant, avec un angle de rasance par exemple compris entre 5° et 30°. L'angle de rasance est défini comme l'angle au plan tangent à la surface de l'antenne élémentaire sur la peau de la région intermédiaire 22.

La peau de l'aéronef est la surface externe de l'aéronef au contact de la masse d'air dans laquelle circule l'aéronef.

Un exemple d'antenne élémentaire est une antenne à onde de fuite. Cet exemple d'antenne offre l'avantage d'être affleurant, ce qui permet de minimiser l'impact de son intégration sur un aéronef, comme par exemple la gêne à l'écoulement aérodynamique de l'air sur la surface de l'aéronef. L'antenne comporte avantageusement un diélectrique allongé avec des faces métallisées. Un réseau de fentes est pratiqué dans la métallisation de la face supérieure. La longueur des fentes ainsi que la largeur du guide suivent une loi d'évolution graduelle configurée pour que les fentes ne créent pas d'onde retour. L'antenne élémentaire comporte une cavité résonante amont alimentant le guide d'onde et une cavité résonante aval pour recueillir l'énergie résiduelle et la dissiper dans une charge, afin de ne pas créer une onde retour dans le guide.

De même, les récepteurs 46 sont affleurant à la peau de la région intermédiaire 22 et sont dépourvus de mécanisme d'escamotage. Ils présentent une surface quasiment perpendiculaire à la direction de réception. Ils sont formés des mêmes antennes élémentaires que les émetteurs 42.

Dans l'exemple représenté sur la figure 1, chaque ligne d'émetteurs 42 est située sur une surface supérieure de la peau de la région intermédiaire 22, au-dessus de l'axe avion A-A', la ligne de récepteurs 46 étant située sur une surface inférieure de la peau de la région intermédiaire 22, au-dessous de l'axe avion A-A'.

Chaque ligne 40 d'émetteurs 42 et chaque ligne 44 de récepteurs 46 est ici une ligne courbe. La ligne courbe est par exemple un arc de cercle. La courbure s'adapte avantageusement à la forme de l'avion notamment pour minimiser l'impact de l'intégration des antennes sur l'avion.

Compte tenu de son implantation, la ligne 40 d'émetteurs 42 présente ici une concavité dirigée vers l'axe avion A-A', et la ligne 44 de récepteurs 46 présente également une concavité dirigée vers l'axe avion A-A' dirigée vers la concavité de la ligne 40 d'émetteurs 42.

Les émetteurs 42 de chaque ligne 40 étant situés à l'écart des récepteurs 46 de chaque ligne 44, les émissions réalisées à l'aide des émetteurs 42 et reçues sur les récepteurs 46 créent le réseau dense d'émetteurs/récepteurs virtuels 54 en leur barycentre.

Ainsi, le réseau d'émetteurs/récepteurs virtuels 54 résulte des interactions successives de chaque émetteur 42 avec une pluralité de récepteurs 46 de la ligne 44, avantageusement avec tous les récepteurs 46 de la ligne 44, pour former la ligne 52 d'émetteurs/récepteurs virtuels 54 à leur barycentre.

Le réseau d'émetteurs/récepteurs virtuels 54 est continu. A cet effet, la distance maximale séparant deux émetteurs/récepteurs virtuels 54 adjacents, projetée sur la direction d'allongement A est avantageusement inférieure au pas P défini plus haut.

La densité linéique d'émetteurs/récepteurs virtuels 54 dans le réseau continu d'émetteurs/récepteurs virtuels 54, projetée le long de la direction d'allongement A est supérieure à la densité linéique d'émetteurs 42 dans le groupe d'émetteurs 42, projetée le long de la direction d'allongement A et est supérieure à la densité linéique de récepteurs 46 dans le groupe de récepteurs 46, projetée le long de la direction d'allongement A.

Le nombre d'émetteurs 42 rayonnants réels reste donc très limité par rapport au nombre d'émetteurs/récepteurs 54 rayonnants virtuels.

Cela diminue le coût du système et simplifie son intégration sur un aéronef.

Ainsi, un pas P/2 de réseau d'émetteurs/récepteurs virtuels 54 est obtenu, qui ne serait pas facilement atteignable avec un réseau physique d'antennes et qui serait beaucoup plus coûteux.

Dans l'exemple représenté sur la figure 3, le capteur 30 comporte une première ligne 40 d'émetteurs 42 situés d'un côté d'un plan vertical passant par l'axe avion A-A', et une deuxième ligne 40 d'émetteurs 42 situés d'un autre côté du plan vertical passant par l'axe avion A-A' symétriquement par rapport à la première ligne 40.

Les lignes 40 d'émetteurs 42 délimitent entre elles une zone lacunaire 56 dépourvue d'émetteurs 42. Cette zone lacunaire 56 est destinée avantageusement à recevoir le capteur optique 36, lorsqu'un tel capteur 36 est présent sur l'aéronef.

La zone lacunaire 56 présente avantageusement une largeur, prise parallèlement à la direction d'allongement A, supérieure à 5 fois le pas P.

Dans cet exemple, compte tenu de l'agencement sur la région intermédiaire 22, la première ligne 40 d'émetteurs 42 et la deuxième ligne 40 d'émetteurs 42 sont situées sensiblement sur des arcs du même cercle en projection dans le plan π contenant les émetteurs 42. De même, la ligne 44 de récepteurs 46 est située sensiblement sur un arc du même cercle.

Dans cette configuration, le réseau d'émetteurs/récepteurs virtuels 54 forme une ligne ou une pseudo ligne 52 s'étendant suivant la direction d'allongement.

Lorsqu'il forme une « pseudo ligne », le réseau d'émetteurs/récepteurs virtuels 54 présente généralement une hauteur, prise perpendiculairement à la direction d'allongement A dans le plan π, inférieure, avantageusement inférieure à 0,1 fois l'étendue longitudinale du réseau d'émetteurs/récepteurs virtuels 54, prise le long de la direction d'allongement A.

La hauteur du réseau d'émetteurs/récepteurs virtuels 54 est inférieure notamment à 10 fois le pas P.

Le réseau d'émetteurs/récepteurs virtuels 54 comporte un premier sous réseau latéral 58A résultant d'interactions entre chaque émetteur 42 de la première ligne 40 d'émetteurs 42 et chaque récepteur 46 de la ligne 44 de récepteurs 46 et un deuxième sous réseau latéral 58B comprenant des émetteurs/récepteurs virtuels 54 résultant de l'interaction entre un émetteur 42 de la deuxième ligne 40 d'émetteurs 42 et les récepteurs 46 de la ligne 44.

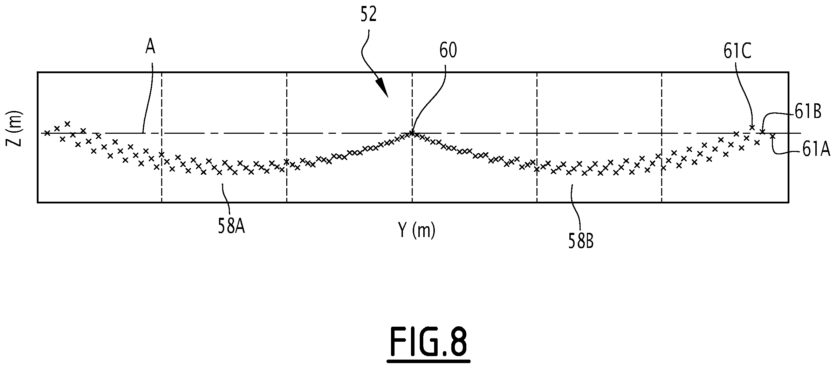

Dans l'exemple illustré par les figures 3 et 8, les sous réseaux 58A, 58B présentent une extrémité commune 60. Les sous réseaux 58A, 58B comprennent chacun une pluralité de lignes 61A, 61B, 61C d'émetteurs/récepteurs virtuels 54 au moins en partie superposées vers l'extrémité commune 60 et divergeant à l'écart de l'extrémité commune 60. Chaque ligne 61A, 61B, 61C résulte de l'interaction entre un seul émetteur 42 de la deuxième ligne 40 d'émetteurs 42 et une pluralité de récepteurs 46 de la ligne 44, avantageusement tous les récepteurs de la ligne 44.

Les sous réseaux 58A, 58B forment ainsi une pseudo ligne, telle que définie plus haut, avec une dispersion verticale faible, malgré la courbure d'implantation des lignes 40 d'émetteurs 42 et de la ligne 44 de récepteurs 46.

La disposition relative de la ligne 40 d'émetteurs 42 et de la ligne 44 de récepteurs 46 maximise le découplage entre les émetteurs 42 et les récepteurs 46 en plaçant les émetteurs 42 au-dessus de l'axe avion A-A' et les récepteurs 46 en dessous de l'axe avion A-A'. En outre, la zone lacunaire 56 permet d'intégrer un autre capteur, notamment le capteur optique 36, sans interaction entre les émetteurs 42 de chaque ligne 40 et les récepteurs 46 de la ligne 44.

Le nombre d'émetteurs 42 réels est minimisé. Par exemple, chaque ligne 40 d'émetteurs 42 comporte avantageusement entre 2 et 10 émetteurs, notamment trois émetteurs 42.

La ligne 44 de récepteurs 46 comporte un nombre de récepteurs 46 avantageusement supérieur au nombre d'émetteurs 42. Le nombre de récepteurs 46 est par exemple supérieur à dix, notamment égal à vingt-quatre. Le nombre de récepteurs 46 reste inférieur à 40.

Ainsi, une ligne 52 d'émetteurs/récepteurs virtuels 54 comportant plus de cinquante émetteurs/récepteurs 54 est engendrée, notamment comportant cent trente-huit émetteurs/récepteurs 54 virtuels dans l'exemple de la figure 3.

L'ensemble de génération de forme d'onde 48 est propre à alimenter simultanément chaque émetteur 42 de chaque ligne 40 avec un signal électromagnétique périodique, notamment sinusoïdal, dans une gamme de fréquences comprises notamment entre 8 GHz et 100 GHz notamment entre 28 GHz et 35 GHz, de préférence entre 31,8 GHz et 33,4 GHz.

De préférence, l'ensemble de génération de forme d'onde 48 est propre à alimenter simultanément tous les émetteurs 42 sur des bandes de fréquences espacées en fréquence d'un écart par exemple supérieur à 20 KHz, notamment compris entre 50 KHz et 150 KHz.

Chaque émetteur 42 de chaque ligne 40 est ainsi propre à émettre à chaque instant à une fréquence distincte des autres émetteurs 42 de la ligne 40.

De préférence, la fréquence du signal émis est modulée périodiquement suivant une forme d'onde prédéterminée. La forme d'onde est avantageusement à émission continue, par exemple de type FMCW (« Frequency Modulation Continuous Wave » ou « Onde Continue à Modulation de Fréquence »).

Du fait de l'émission continue, la puissance crête émise par les émetteurs 42 est très faible, car égale à sa puissance moyenne. Ceci confère un avantage important en termes de compatibilité électromagnétique pour l'intégration du système et également en termes de coût des composants.

En outre, le capteur 30 ne possède pas de distance aveugle, c'est-à-dire de distance minimum de détection. Ceci permet son utilisation même à très courte distance.

La modulation du signal périodique en fréquence croit ou/et décroit à chaque période de la forme d'onde.

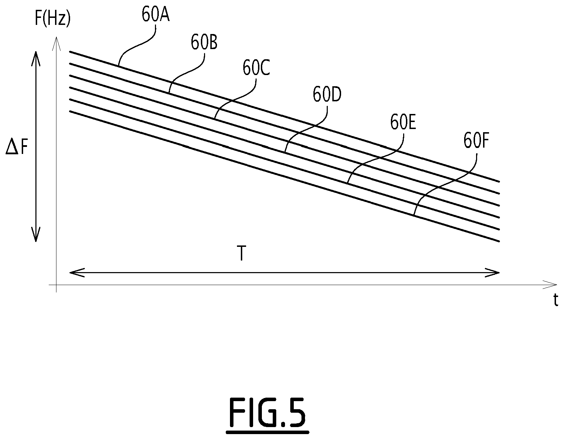

Avantageusement, la modulation sur une période T de la forme d'onde est en forme de rampe linéaire décroissante à chaque période T, comme illustré par la figure 5 qui représente la fréquence de modulation des signaux 60A, 60B, 60C, 60D 60E et 60F des émetteurs 42 respectifs de chaque ligne 40.

Dans cet exemple, la variation de fréquence en fonction du temps est linéaire sur la période T. La différence de fréquence entre le début de chaque période et la fin de chaque période est par exemple supérieure à 10 MHz, notamment comprise entre 12 MHz et 350 MHz.

Les signaux 60A à 60F sont décalés les uns des autres d'une fréquence constante dans le temps.

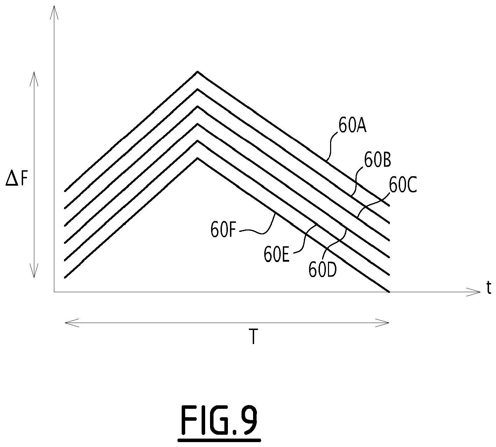

En variante, illustrée par la figure 9, la modulation du signal périodique en fréquence croit dans une première partie de la période T et décroit dans une deuxième partie de la période T. Elle présente avantageusement une rampe linéaire croissante, suivie d'une rampe linéaire décroissante.

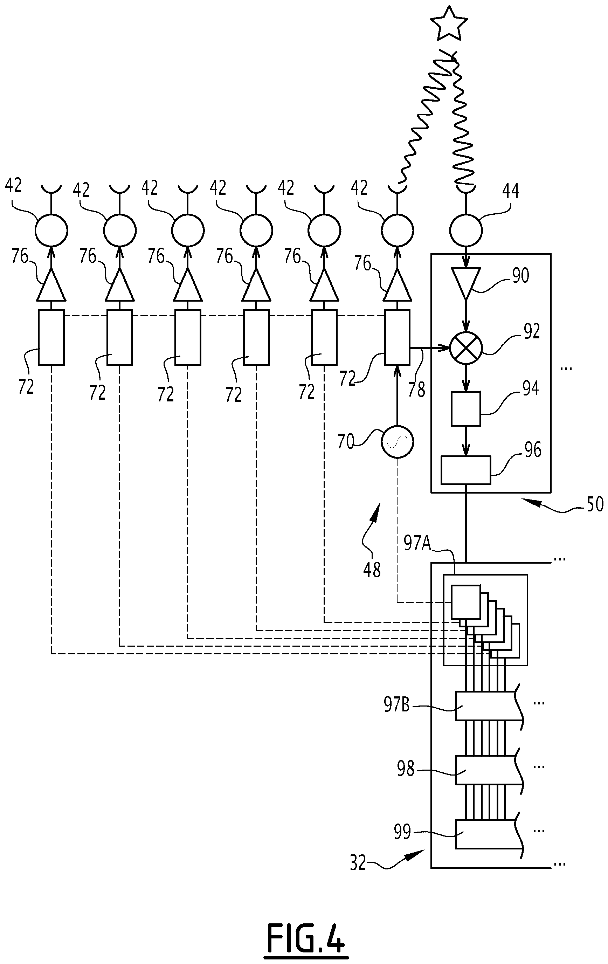

Dans l'exemple représenté schématiquement sur la figure 4, l'ensemble de génération de forme d'onde 48 comporte un oscillateur de référence 70, un générateur 72 de formes d'onde à partir du signal engendré par l'oscillateur 70, et avantageusement un amplificateur 76 de puissance.

L'oscillateur de référence 70 est propre à engendrer un signal d'excitation à une fréquence comprise notamment entre 8 GHz et 100 GHz notamment entre 28 GHz et 35 GHz, de préférence entre 31,8 GHz et 33,4 GHz.

Le générateur 72 est destiné à créer et à assurer une forme d'onde avec une rampe linéaire de modulation de fréquence en fonction du temps sur chaque période T.

Il comprend avantageusement une boucle à verrouillage de phase et un modulateur.

Un conjugué 78 du signal émis est propre à être extrait du générateur 72 pour être mélangé avec le signal reçu par l'ensemble de capture 50.

Le générateur 72 est propre à créer la rampe de modulation adaptée à chaque émetteur 42 avec le décalage en fréquence choisi par rapport à la modulation de fréquence des autres émetteurs 42.

L'amplificateur de puissance 76 est disposé en aval du signal modulé pour amplifier ce signal en vue de sa transmission à l'émetteur 42.

Le signal émis par chaque émetteur 42 est donc un signal sinusoïdal dont la fréquence est modulée en dent de scie autour d'une porteuse.

L'ensemble de capture 50 est propre à capturer les signaux reçus par chaque récepteur 46 après réflexion sur le terrain et à déterminer un retard $\delta t$ entre les signaux émis et les signaux reçus.

Le retard $\delta t$ engendre un décalage en fréquence entre le signal émis par l'émetteur 42 et le signal reçu par le récepteur 46 provenant de l'émetteur 42 à chaque instant t.

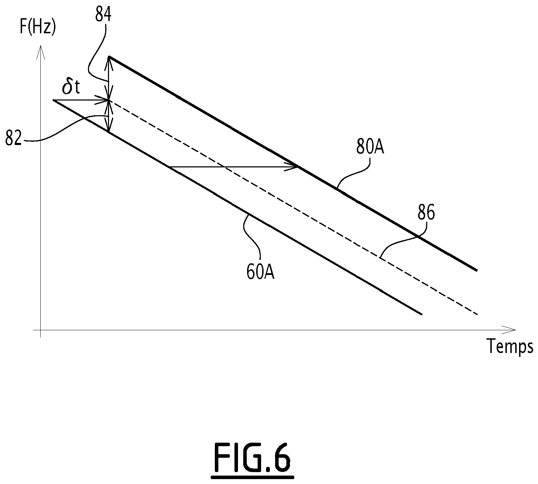

Comme illustré par la figure 6, le décalage en fréquence à chaque instant t entre le signal émis 60A et le signal reçu 80A résultant de l'émission du signal 60A comporte une contribution 82 liée au retard $\delta t$ du signal reçu par rapport au signal émis et une contribution 84 liée à l'effet Doppler due au déplacement de l'aéronef 10 par rapport au terrain.

La contribution liée au Doppler est calculée en connaissant la vitesse de l'aéronef 10 par rapport au terrain à l'aide d'un capteur de vitesse sol présent dans l'aéronef 10, notamment un GPS ou une centrale inertielle.

Une fois cette contribution calculée, le retard $\delta t$ est déduit à partir de la différence de fréquence à chaque instant entre le signal émis 60A et le signal reçu 80A corrigé du doppler 86 par l'équation :

$$\delta t = T \times \delta f / \Delta F$$

où $\Delta F$ est la variation maximale de fréquence du signal émis sur une période T de la forme d'onde et $\delta f$ est la contribution 82 .

Pour déterminer la contribution 82, l'ensemble de capture 50 comporte un amplificateur faible bruit 90, destiné à amplifier le signal reçu par chaque récepteur 46, un mélangeur 92, destiné à recevoir le conjugué 78 du signal émis par un ou plusieurs émetteurs 42, un filtre passe-bas 94, destiné à supprimer les harmoniques issues du mélange dans le mélangeur 92, et un convertisseur analogique numérique 96.

L'unité de traitement 32 comporte par exemple un processeur et une mémoire comportant des composants logiciels propres à être exécutés par le processeur. En variante, les composants sont réalisés au moins partiellement sous forme de composants logiques programmables, ou encore sous forme de circuits intégrés dédiés.

L'unité de traitement 32 comporte un composant 97A de séparation dans le signal reçu par chaque récepteur 46 des signaux émis par chaque émetteur 42 afin de restituer le signal de chaque émetteur/récepteur virtuel 54 et un composant 97B de filtrage de chaque signal reçu par chaque émetteur/récepteur virtuel 54 en fonction de la direction par rapport à la direction d'observation, en particulier en fonction d'un gisement par rapport à la direction d'observation.

L'unité de traitement 32 comporte en outre un composant 98 de calcul d'une transformée de Fourier rapide sur les signaux filtrés pour appliquer un filtrage en distance et un composant 99 d'établissement d'une image du terrain à partir des signaux filtrés en fonction de la direction.

Le composant 97A est par exemple un filtre fréquentiel, propre à séparer les signaux reçus sur chaque récepteur 46 en fonction des fréquences décalées émises par chaque émetteur 42, pour engendrer le signal reçu sur l'émetteur/récepteur virtuel 54 correspondant.

Le composant 97B est configuré pour effectuer une formation de faisceau par le calcul (« Digital Beam Forming » en anglais) propre à trier le signal en fonction de la direction depuis laquelle il a été reçu.

La formation de faisceau par le calcul est propre à capturer les signaux reçus sur chaque émetteur/récepteur virtuel 54 et à trier l'information obtenue pour filtrer des signaux en fonction de la direction depuis laquelle elle a été reçue, et effectuer ainsi un filtrage en gisement.

Le composant 98 est propre à appliquer une transformée de Fourier sur le signal de chaque direction et ainsi obtenir une raie en fréquence représentative de la contribution du retard $\delta t$ (la contribution du Doppler ayant été extraite) pour fournir un filtrage en distance.

Le composant 99 est propre à obtenir des composants 97B et 98 une information de puissance reçue en fonction de la direction et de la distance pour construire une carte de réflectivité mesurée dans la direction d'observation D. Le composant 99 est propre à reconstituer une image avec un contraste dépendant de la réflectivité mesurée dans la direction d'observation D à l'aide de la puissance reçue.

Ce contraste permet notamment d'identifier des différences entre une piste d'atterrissage ou des voies d'accès à la piste, généralement avec une réflectivité dans la direction d'observation D plus faible, et le sol entourant la piste, généralement avec une réflexibilité dans la direction d'observation D plus forte.

Une image du terrain situé dans la direction de visée du capteur 30 peut donc être obtenue pour un gisement par exemple compris entre -20° et + 20° à des distances inférieures à 5000 m et comprises notamment entre 5 m et 10000 m.

Un procédé de vision améliorée, mis en oeuvre à l'aide du système de vision 12 selon l'invention va maintenant être décrit, dans le cadre d'une phase d'approche de l'aéronef 10 vers un terrain.

Lorsque l'équipage rencontre des conditions météorologiques diminuant notablement la visibilité, par exemple un brouillard dense ou un plafond nuageux bas, il met en oeuvre le système de vision améliorée 12.

Dans ce cas, l'ensemble de génération de forme d'onde 48 s'active. Avantageusement, l'oscillateur de référence 70 engendre un signal périodique, en particulier sinusoïdal, et ce signal est modulé par le générateur 72 à la fréquence adaptée à l'émetteur 42 pertinent, suivant la forme d'onde exposée plus haut.

Une partie du signal est ensuite conjuguée pour former un signal conjugué 78 destiné à l'ensemble de capture 50.

Chaque émetteur 42 de chaque ligne 40 est alimenté simultanément pour engendrer un signal électromagnétique périodique, dont la fréquence est modulée autour d'une porteuse, suivant une forme d'onde à émission continue périodique décrite plus haut.

Le signal périodique est généré dans une bande de fréquence comprise entre 8 GHz et 100 GHz notamment entre 28 GHz et 35 GHz, de préférence entre 31,8 GHz et 33,4 GHz.

Comme illustré par la figure 5, la modulation comprend avantageusement, à chaque période de la forme d'onde, une rampe de fréquence décroissante depuis une fréquence maximale vers une fréquence minimale, ou comme sur la figure 9 une rampe croissante suivie d'une rampe décroissante.

Les rampes de fréquence 60A à 60F des différents émetteurs 42 sont décalées en fréquence les unes par rapport aux autres d'un décalage en fréquence par exemple supérieur à 20 KHz, notamment compris entre 50 KHz et 150 KHz.

Le signal émis est réfléchi sur le terrain pour être également reçu en continu sur les récepteurs 46. Ce signal est retardé, ce qui induit un décalage linéaire en fréquence par rapport au signal émis, ce décalage linéaire incluant également un effet Doppler.

L'ensemble 50 capture chaque signal reçu sur chaque récepteur 46 et mélange ces signaux avec un ou plusieurs conjugués des signaux émis pour en extraire un signal représentatif d'une différence de fréquence entre le signal émis et le signal reçu. Le filtre passe-bas 94 supprime les harmoniques issues du mélange. Le signal obtenu est alors numérisé dans le convertisseur analogique numérique 96.

Compte tenu de la disposition des émetteurs suivant un premier pas n.P sur chaque ligne 40, et des récepteurs 46 agencés suivant un deuxième pas m.P sur la ligne 44, m et p étant premiers entre eux, le signal émis à partir des émetteurs 42 et reçu au niveau des récepteurs 46 est équivalent au signal qu'auraient reçu une pluralité d'émetteurs/récepteurs virtuels 54 situés au barycentre des émetteurs 42 et des récepteurs 46 réels.

Un réseau continu d'émetteurs/récepteurs virtuels 54 de densité beaucoup plus importante et de pas égal à P/2 est ainsi formé avec un pas du réseau virtuel de l'ordre de la demi-longueur d'onde du signal émis.

Le composant 97A de l'unité de traitement 32 récupère l'ensemble des signaux reçus sur les émetteurs/récepteurs virtuels 54 à chaque instant et le composant 97B forme un faisceau par le calcul à partir des signaux reçus pour trier le signal en fonction de la direction depuis laquelle il a été reçu.

Sur le signal de chaque direction, le composant 98 applique une transformée de Fourier et effectue ainsi un filtrage en distance.

Le composant 99 recueille alors des composants 97B, 98 une information de puissance reçue en fonction de la distance et du gisement, en déduit une carte de réflectivité, et forme une image sur la base de la carte de réflectivité.

Des images du terrain ou/et des informations obtenues à partir de la carte de réflectivité sont affichées sur l'afficheur 34 à une fréquence supérieure à 0,5Hz, notamment supérieure à 2Hz. Ceci permet à l'équipage de distinguer des détails du terrain situé à l'avant et plus bas que l'aéronef, notamment un contraste entre le revêtement d'une piste d'atterrissage ou d'une voie d'accès et le sol au voisinage de ce revêtement.

L'équipage peut ainsi observer la présence et la localisation d'une piste d'atterrissage, à une hauteur adéquate pour prendre une décision, même si la visibilité est très faible, voire quasi nulle.

En variante, le capteur optique 36 est utilisé en combinaison ou de manière alternative au capteur électromagnétique 30.

La disposition du capteur optique 36 dans la zone lacunaire 56 entre les lignes 44 d'émetteurs 42 évite les interférences mécaniques entre le capteur optique 36 et le capteur électromagnétique 30, tout en garantissant le bon fonctionnement individuel de chacun des capteurs 30, 36.

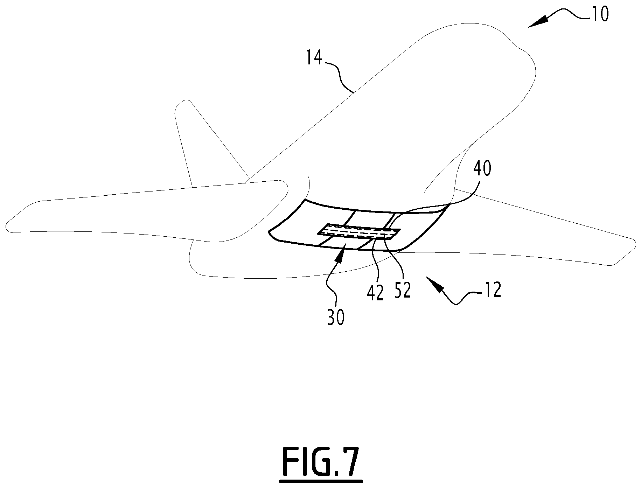

Dans une variante représentée sur la figure 7, la ligne 40 d'émetteurs 42 et la ligne 44 de récepteurs 46 du capteur électromagnétique sont situées sur une règle disposée en dessous du Karman de l'aéronef. Les lignes 40, 44 sont alors droites, et parallèles l'une à l'autre. Le nombre d'émetteurs 42 est par exemple égal ou supérieur à celui décrit précédemment et le nombre de récepteurs 46 est par exemple égal ou supérieur à celui décrit précédemment. Le réseau continu d'émetteurs/récepteurs 54 est alors une ligne droite 52 d'émetteurs/récepteurs virtuels, parallèle aux lignes 40, 44 et située entre ces lignes 40, 44.

L'implantation sous le Karman permet de disposer d'un capteur électromagnétique 30 de longueur importante et linéaire offrant une visibilité permanente de la piste pendant l'approche. La longueur importante a comme avantage de fournir une résolution plus importante de l'image en gisement.

Grâce à l'invention qui vient d'être décrite, il est donc possible de créer un capteur électromagnétique 30 présentant un grand nombre d'émetteurs/récepteurs virtuels 54 avec une densité assurant un pas maximum suffisant pour empêcher l'apparition de lobes de sous-réseaux. Ceci est obtenu en implantant un réseau réel d'émetteurs 42 et de récepteurs 46 beaucoup moins dense pour faciliter l'intégration de ces éléments sur un aéronef 10.

Le réseau réel d'émetteurs 42 et de récepteurs 46 est en outre affleurant et dépourvu d'éléments mobiles. Ainsi, le capteur électromagnétique 30 est facilement implantable sur l'aéronef, sans modification de sa structure externe et sans affecter ses performances aérodynamiques.

L'alimentation simultanée de tous les émetteurs 42 avec une modulation en fréquence propre à chaque émetteur 42 correspond à une émission simultanée sur un réseau virtuel d'émetteurs/récepteurs 54 de grande densité. Ceci permet à l'unité de traitement 32 d'effectuer une formation de faisceau par le calcul, et donc d'obtenir une image avec une ouverture en gisement et en distance élevée.

La formation de faisceau par le calcul permet également d'obtenir des cadences d'observation qui sont non atteignables par une antenne à balayage mécanique, tout en évitant l'utilisation d'éléments mécaniques et de parties mobiles.

L'implantation dans la région intermédiaire 22 est en outre très avantageuse en ce qu'elle évite les couplages avec d'autres éléments mobiles de l'aéronef tels que les trains d'atterrissage. Elle permet en outre un découplage maximal entre les émetteurs 42 et les récepteurs 46. La présence d'une zone lacunaire 56 permet en outre d'intégrer un capteur optique 36 sans interaction avec le capteur électromagnétique 30.

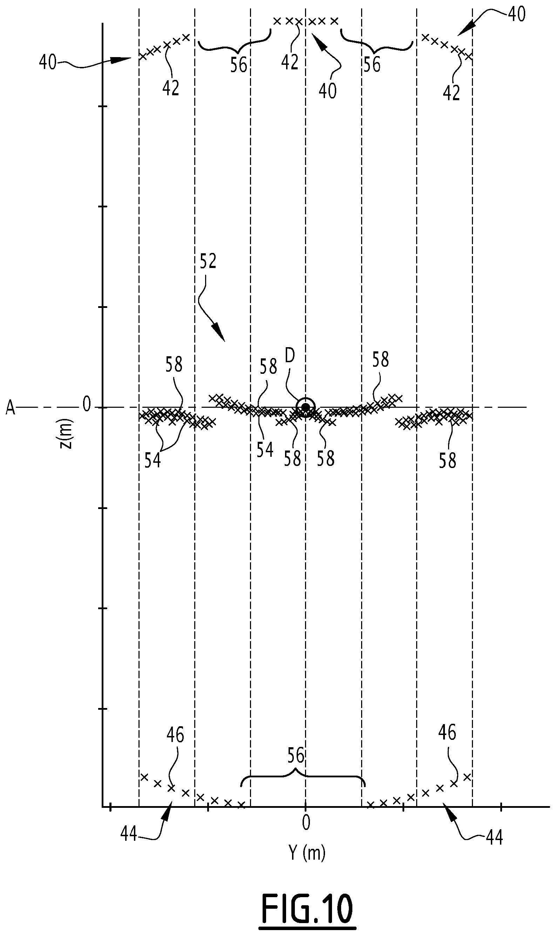

Dans une variante représentée sur la figure 10, le capteur 30 comporte une première ligne 44 de récepteurs 46 situés d'un côté d'un plan vertical passant par l'axe avion A-A' et une deuxième ligne 44 de récepteurs 46 situés d'un autre côté du plan vertical passant par l'axe avion A-A', symétriquement par rapport à la première ligne 44.

Les lignes 44 de récepteurs 46 délimitent entre elles une zone lacunaire 56 dépourvue d'émetteurs 42, de largeur, prise parallèlement à la direction d'allongement A supérieure à 5 fois le pas P.

Dans ce cas, le capteur 30 comporte une troisième ligne 40 d'émetteurs 42 située entre la première ligne 40 d'émetteurs 42 et la deuxième ligne 40 d'émetteurs 42.

La première ligne 40 et la troisième ligne 40 délimitent entre elles une zone lacunaire 56 de largeur, prise parallèlement à la direction d'allongement A supérieure à 5 fois le pas P.

La troisième ligne 40 et la deuxième ligne 40 délimitent entre elles une zone lacunaire 56 de largeur, prise parallèlement à la direction d'allongement A supérieure à 5 fois le pas P.

Malgré la présence des zones lacunaires 56 entre les lignes 40 d'émetteurs 42 et entre les lignes 44 de récepteurs 46, les sous réseaux 58 formés des émetteurs/récepteurs virtuels 54 issus de l'interaction entre les émetteurs 42 d'une seule ligne 40 et les récepteurs 46 d'une seule ligne 44 définissent un réseau d'émetteurs/récepteurs virtuels 54 continu selon la direction d'allongement A.

Le réseau conserve ici une forme de pseudo ligne 52 suivant l'axe Z perpendiculaire à la direction d'allongement A.

Dans une variante (non représentée), le capteur 30 comporte plusieurs réseaux d'émetteurs/récepteurs virtuels 54 formant chacun une ligne ou une pseudo ligne 52 parallèlement à la même direction d'allongement A, les réseaux étant espacés verticalement les uns des autres.

## Revendications

1. Système (12) de vision améliorée d'aéronef (10), comportant :

- au moins un capteur de vision d'un terrain suivant une direction d'observation (D), le terrain étant situé à l'avant et plus bas que l'aéronef (10) ;
- une unité de traitement (32), propre à constituer une carte de réflectivité du terrain à partir de données collectées par le capteur de vision ;
- un afficheur (34) d'images du terrain reconstituées par l'unité de traitement (32) à partir de la carte de réflectivité ou/et d'informations caractéristiques du terrain élaborées par l'unité de traitement (32) à partir de la carte de réflectivité, l'afficheur (34) étant destiné à être placé dans un cockpit de l'aéronef (10) ;

dans lequel le capteur de vision est un capteur électromagnétique (30) comprenant une pluralité d'émetteurs (42) d'un signal émis, les émetteurs (42) constituant au moins un groupe d'émetteurs (42) et une pluralité de récepteurs (46) d'un signal reçu, issu du signal émis après réflexion sur le terrain, les récepteurs (46) constituant au moins un groupe de récepteurs (46), le capteur électromagnétique (30) comportant un ensemble (48) de génération de forme d'onde alimentant chaque émetteur (42) pour engendrer le signal émis et un ensemble (50) de capture du signal reçu par chaque récepteur (46) après réflexion sur le terrain,

les émetteurs (42) étant distincts et espacés des récepteurs (46) en étant agencés pour engendrer, à partir de chaque combinaison formée d'un émetteur (42) et d'un récepteur (46), entre le groupe d'émetteurs (42) et le groupe de récepteurs (46), au moins un réseau d'émetteurs/récepteurs virtuels (54) s'étendant suivant une direction d'allongement (A) transverse à la direction d'observation (D),

la densité linéique d'émetteurs/récepteurs virtuels (54) dans le réseau le long de la direction d'allongement (A) étant supérieure à la densité linéique d'émetteurs (42) dans le groupe d'émetteurs (42) le long de la direction d'allongement (A) et étant supérieure à la densité linéique de récepteurs (46) dans le groupe de récepteurs (46) le long de la direction d'allongement (A),

**caractérisé en ce qu'**au moins un groupe d'émetteurs (42) destiné à être placé sur l'une d'une surface supérieure ou d'une surface inférieure d'une peau d'une région intermédiaire sensiblement tronconique (22) d'une pointe avant (16) de l'aéronef (10), et au moins un groupe de récepteurs (46) est destiné à être placé sur l'autre de la surface supérieure ou de la surface inférieure de la peau de la région intermédiaire sensiblement tronconique (22).

2. Système (12) selon la revendication 1, dans lequel les émetteurs (42) sont agencés suivant un premier pas n.P le long de la direction d'allongement (A) dans le groupe d'émetteurs (42), les récepteurs (46) étant agencés suivant un deuxième pas m.P le long de la direction d'allongement (A) dans le groupe de récepteurs (46), les nombres n et m étant des nombres entiers premiers entre eux, le réseau d'émetteurs/récepteurs virtuels (54) engendré à partir de chaque combinaison formée d'un émetteur (42) et d'un récepteur (46) présentant un pas P/2 le long de la direction d'allongement (A).

3. Système (12) selon l'une quelconque des revendications précédentes, dans lequel le réseau d'émetteurs/récepteurs virtuels (54) est agencé suivant une ligne ou une pseudo-ligne le long de la direction d'allongement (A).

4. Système (12) selon l'une quelconque des revendications précédentes, dans lequel le capteur électromagnétique (30) comporte un premier groupe d'émetteurs (42), et au moins un deuxième groupe d'émetteurs (42), les groupes d'émetteurs (42) adjacents entre eux étant séparés par une zone lacunaire (56), sans émetteurs (42) et sans récepteurs (46) dans la zone lacunaire (56),

ou/et dans lequel le capteur électromagnétique (30) comporte un premier groupe de récepteurs (46) et au moins un deuxième groupe de récepteurs (46), les groupes de récepteurs (46) adjacents entre eux étant séparés par une zone lacunaire (56), sans émetteurs (42) et sans récepteurs (46) dans la zone lacunaire (56),

dans lequel éventuellement le réseau d'émetteurs/récepteurs virtuels (54) comporte un premier sous réseau (58A) comprenant exclusivement des émetteurs/récepteurs virtuels (54) résultant des interactions entre un émetteur (42) du premier groupe d'émetteurs (42) et un récepteur (46) d'un groupe de récepteurs (46), et un deuxième sous réseau (58B) comportant exclusivement des émetteurs/récepteurs virtuels (54) résultant de l'interaction d'un émetteur (42) du deuxième groupe d'émetteurs (42) et d'un récepteur (46) du même groupe de récepteurs (46), le premier sous réseau (58A) du réseau d'émetteurs/récepteurs virtuels (54) s'étendant dans la continuité du deuxième sous réseau (58B) du réseau d'émetteurs/récepteurs virtuels (54)

ou dans lequel éventuellement le réseau d'émetteurs/récepteurs virtuels (54) comporte un premier sous réseau (58A) comprenant exclusivement des émetteurs/récepteurs virtuels (54) résultant des interactions entre un émetteur (42) d'un groupe d'émetteurs (42) et un récepteur (46) du premier groupe de récepteurs (46), et un deuxième sous réseau (58B) comportant exclusivement des émetteurs/récepteurs virtuels (54) résultant de l'interaction d'un émetteur (42) du même groupe d'émetteurs (42) et d'un récepteur (46) du deuxième groupe de récepteurs (46), le premier sous réseau (58A) du réseau d'émetteurs/récepteurs virtuels (54) s'étendant dans la continuité du deuxième sous réseau (58B) du réseau d'émetteurs/récepteurs virtuels (54).

5. Système (12) selon la revendication 4, dans lequel le capteur de vision comporte un capteur optique (36) disposé dans la zone lacunaire (56).

6. Système (12) selon l'une quelconque des revendications précédentes, dans lequel le groupe d'émetteurs (42) est agencé suivant une ligne (40) d'émetteurs (42), en particulier une ligne courbe présentant une concavité et le groupe de récepteurs (46) est agencé suivant une ligne (44) de récepteurs (46), en particulier une ligne courbe présentant une concavité.

7. Système (12) selon l'une quelconque des revendications précédentes dans lequel le ou chaque groupe d'émetteurs (42) est destiné à être placé sur une surface supérieure d'une peau d'une région intermédiaire sensiblement tronconique (22) d'une pointe avant (16) de l'aéronef (10), le ou chaque groupe de récepteurs (46) étant destiné à être placé sur une surface inférieure de la peau de la région intermédiaire sensiblement tronconique (22)
ou dans lequel le ou chaque groupe d'émetteurs (42) est destiné à être placé sur une surface inférieure d'une peau d'une région intermédiaire sensiblement tronconique (22) d'une pointe avant (16) de l'aéronef (10), le ou chaque groupe de récepteurs (46) étant destiné à être placé sur une surface supérieure de la peau de la région intermédiaire sensiblement tronconique (22).

8. Système (12) selon l'une quelconque des revendications précédentes, **caractérisé en ce que** chaque émetteur (42) est formé par une antenne affleurant émettant en rasant, l'antenne étant dépourvue d'élément mobile.

9. Système (12) selon l'une quelconque des revendications précédentes, dans lequel l'ensemble de génération de forme d'onde (48) est propre à engendrer simultanément des formes d'ondes à des fréquences décalées de manière constante au cours du temps pour plusieurs émetteurs (42) du groupe d'émetteurs (42).

10. Système (12) selon l'une quelconque des revendications précédentes, dans lequel l'ensemble de génération de forme d'onde (48) est propre à générer, pour chaque émetteur (42), un signal périodique porteur modulé en fréquence avec une forme d'onde périodique présentant une fréquence croissante et/ou décroissante durant chaque période de la forme d'onde,
dans lequel éventuellement l'ensemble de capture (50) est propre à engendrer un signal représentatif d'une différence de fréquence entre le signal émis et le signal reçu à chaque instant, la différence de fréquence entre le signal émis et le signal reçu étant représentative du décalage temporel entre le signal émis et le signal reçu.

11. Système (12) selon l'une quelconque des revendications précédentes, dans lequel l'unité de traitement (32) comporte un composant (97A) de séparation dans le signal reçu sur chaque récepteur (46) du signal émis par chaque émetteur (42) pour restituer le signal reçu par chaque émetteur/récepteur virtuel (54) et un composant (97B) de filtrage des signaux reçus par les émetteurs récepteurs/virtuels (54) en fonction de la direction par rapport à la direction d'observation (D), en particulier en fonction d'un gisement par rapport à la direction d'observation (D).

12. Système (12) selon l'une quelconque des revendications précédentes, dans lequel l'image du terrain reconstituée par l'unité de traitement (32) à partir de la carte de réflectivité comporte une piste d'atterrissage, ou/et les informations obtenues à partir de la carte de réflectivité reconstituée par l'unité de traitement (32) sont des caractéristiques d'une piste d'atterrissage, notamment son contour, son seuil ou/et son axe.

13. Aéronef (10), comportant un système (12) de vision améliorée selon l'une quelconque des revendications 1 à 12, l'afficheur (34) étant disposé dans un cockpit de l'aéronef (10), l'aéronef (10) comportant une région intermédiaire sensiblement tronconique (22) de pointe avant (16), au moins un premier groupe choisi parmi un groupe d'émetteurs (42) et un groupe de récepteurs (46) étant placé sur une surface supérieure d'une peau de la région intermédiaire tronconique (22), un deuxième groupe choisi parmi le groupe d'émetteurs (42) et le groupe de récepteurs (46) étant placé sur une surface inférieure de la peau de la région intermédiaire sensiblement tronconique (22).

14. Procédé de vision améliorée dans un aéronef (10) comportant les étapes suivantes :

- fourniture d'un système (12) de vision selon l'une quelconque des revendications 1 à 12 ;
- alimentation, par l'ensemble de génération de forme d'onde (48) de chaque émetteur (42) du groupe d'émetteurs (42) et capture, par chaque récepteur (46) du groupe de récepteurs (46) d'un signal émis après réflexion sur le terrain ;
- traitement, par l'unité de traitement (32), du signal émis et du signal reçu pour obtenir les signaux reçus sur le réseau d'émetteurs/récepteurs virtuels (54) s'étendant suivant une direction d'allongement (A) transverse à la direction d'observation (D),
- reconstitution d'une carte de réflectivité à partir des signaux reçus sur le réseau d'émetteurs/récepteurs virtuels (54) ;
- affichage, dans un cockpit de l'aéronef (10), d'images du terrain reconstituées par l'unité de traitement (32) à partir de la carte de réflectivité ou d'informations obtenues à partir d'images du terrain reconstituées par l'unité de traitement (32) à partir de la carte de réflectivité.

## Patentansprüche

1. System (12) zur verbesserten Sicht eines Luftfahrzeugs (10), umfassend:

   - mindestens einen Sichtsensor eines Geländes entlang einer Beobachtungsrichtung (D), wobei sich das Gelände vor und tiefer als das Luftfahrzeug (10) befindet;
   - eine Verarbeitungseinheit (32), die geeignet ist, um eine Karte des Reflexionsvermögens des Geländes anhand der von dem Sichtsensor gesammelten Daten zu erstellen;
   - eine Anzeige (34) von Bildern des Geländes, die von der Verarbeitungseinheit (32) anhand der Reflektivitätskarte rekonstruiert werden, oder/und von charakteristischen Informationen des Geländes, die von der Verarbeitungseinheit (32) anhand der Reflektivitätskarte erarbeitet werden, wobei die Anzeige (34) dazu bestimmt ist, in einem Cockpit des Luftfahrzeugs (10) angeordnet zu werden;
   wobei der Sichtsensor ein elektromagnetischer Sensor (30) ist, umfassend eine Vielzahl von Sendern (42) eines gesendeten Signals, wobei die Sender (42) mindestens eine Gruppe von Sendern (42) bilden, und eine Vielzahl von Empfängern (46) eines empfangenen Signals umfasst, das aus dem gesendeten Signal nach Reflexion auf dem Gelände stammt, wobei die Empfänger (46) mindestens eine Gruppe von Empfängern (46) bilden, der elektromagnetische Sensor (30) umfassend eine Einheit (48) zum Erzeugen einer Wellenform, die jeden Sender (42) speist, um das gesendete Signal zu erzeugen, und eine Einheit (50) zum Erfassen des von jedem Empfänger (46) nach Reflexion an dem Gelände empfangenen Signals,
   wobei die Sender (42) von den Empfängern (46) verschieden und beabstandet sind, indem sie angeordnet sind, um ausgehend von jeder Kombination, die aus einem Sender (42) und einem Empfänger (46) gebildet wird, zwischen der Gruppe von Sendern (42) und der Gruppe von Empfängern (46) mindestens ein virtuelles Sendern/Empfänger-Netzwerk (54) zu erzeugen, das sich entlang einer Längsrichtung (A) quer zu der Beobachtungsrichtung (D) erstreckt,
   wobei die lineare Dichte von virtuellen Sendern/Empfängern (54) in dem Netzwerk entlang der Erstreckungsrichtung (A) größer ist als die lineare Dichte von Sendern (42) in der Gruppe von Sendern (42) entlang der Erstreckungsrichtung (A) und größer ist als die lineare Dichte von Empfängern (46) in der Gruppe von Empfängern (46) entlang der Erstreckungsrichtung (A), **dadurch gekennzeichnet, dass** mindestens eine Gruppe von Sendern (42) zum Anordnen auf einer oberen Fläche oder einer unteren Fläche einer Haut eines im Wesentlichen kegelstumpfförmigen Zwischenbereichs (22) einer vorderen Spitze (16) des Luftfahrzeugs (10) und mindestens eine Gruppe von Empfängern (46) zum Anordnen auf der anderen der oberen Fläche oder der unteren Fläche der Haut des im Wesentlichen kegelstumpfförmigen Zwischenbereichs (22) bestimmt ist.

2. System (12) nach Anspruch 1, wobei die Sender (42) in einer ersten Teilung n.P entlang der Erstreckungsrichtung (A) in der Gruppe von Sendern (42) angeordnet sind, die Empfänger (46) in einer zweiten Teilung m.P entlang der Erstreckungsrichtung (A) in der Gruppe von Empfängern (46) angeordnet sind, wobei die Zahlen n und m ganze Zahlen sind, die zueinander prim sind, wobei das virtuelle Sender/Empfänger-Netzwerk (54), das aus jeder Kombination aus einem Sender (42) und einem Empfänger (46) erzeugt wird, eine Teilung P/2 entlang der Erstreckungsrichtung (A) aufweist.

3. System (12) nach einem der vorherigen Ansprüche, wobei die virtuelle Sender/Empfänger-Netzwerk (54) in einer Linie oder Pseudolinie entlang der Erstreckungsrichtung (A) angeordnet ist.

4. System (12) nach einem der vorherigen Ansprüche, wobei der elektromagnetische Sensor (30) eine erste Gruppe von Sendern (42) und mindestens eine zweite Gruppe von Sendern (42) aufweist, wobei die Gruppen von Sendern (42), die einander benachbart sind, durch einen Lückenbereich (56) getrennt sind, ohne Sender (42) und ohne Empfänger (46) in dem Lückenbereich (56),

   oder/und, wobei der elektromagnetische Sensor (30) eine erste Gruppe von Empfängern (46) und mindestens eine zweite Gruppe von Empfängern (46) aufweist, wobei die Gruppen von Empfängern (46), die einander benachbart sind, durch einen Lückenbereich (56) getrennt sind, ohne Sender (42) und ohne Empfänger (46) in dem Lückenbereich (56),
   wobei gegebenenfalls das virtuelle Sender/Empfänger-Netzwerk (54) ein erstes Teilnetzwerk (58A) umfasst, das ausschließlich virtuelle Sender/Empfänger (54) umfasst, die aus den Interaktionen zwischen einem Sender (42) der ersten Gruppe von Sendern (42) und einem Empfänger (46) einer Gruppe von Empfängern (46) resultieren, und ein zweites Teilnetzwerk (58B), das ausschließlich virtuelle Sender/Empfänger (54) umfasst, die aus der Interaktion eines Senders (42) der zweiten Gruppe von Sendern (42) und eines Empfängers (46) derselben Gruppe von Empfängern (46) resultieren, wobei sich das erste Teilnetzwerk (58A) des virtuellen Sender/Empfänger-Netzwerks (54) in der Kontinuität des zweiten Teilnetzwerks (58B) des virtuellen Sender/Empfänger-Netzwerks (54) erstreckt,

oder, wobei gegebenenfalls das virtuelle Sender/Empfänger-Netzwerk (54) ein erstes Teilnetzwerk (58A) umfasst, das ausschließlich virtuelle Sender/Empfänger (54) umfasst, die aus den Interaktionen zwischen einem Sender (42) einer Gruppe von Sendern (42) und einem Empfänger (46) einer ersten Gruppe von Empfängern (46) resultieren, und ein zweites Teilnetzwerk (58B), das ausschließlich virtuelle Sender/Empfänger (54) umfasst, die aus der Interaktion eines Senders (42) derselben Gruppe von Sendern (42) und eines Empfängers (46) der zweiten Gruppe von Empfängern (46) resultieren, wobei sich das erste Teilnetzwerk (58A) des virtuellen Sender/Empfänger-Netzwerks (54) in der Kontinuität des zweiten Teilnetzwerks (58B) des virtuellen Sender/Empfänger-Netzwerks (54) erstreckt.

5. System (12) nach Anspruch 4, wobei der Sichtsensor einen optischen Sensor (36) umfasst, der in dem Lückenbereich (56) angeordnet ist.

6. System (12) nach einem der vorherigen Ansprüche, wobei die Gruppe von Sendern (42) entlang einer Linie (40) von Sendern (42) angeordnet ist, insbesondere einer gekrümmten Linie, die eine Konkavität aufweist, und die Gruppe von Empfängern (46) entlang einer Linie (44) von Empfängern (46) angeordnet ist, insbesondere einer gekrümmten Linie, die eine Konkavität aufweist.

7. System (12) nach einem der vorherigen Ansprüche, wobei die oder jede Gruppe von Sendern (42) dazu bestimmt ist, auf einer oberen Oberfläche einer Haut eines im Wesentlichen kegelstumpfförmigen Zwischenbereichs (22) einer vorderen Spitze (16) des Luftfahrzeugs (10) angeordnet zu werden, wobei die oder jede Gruppe von Empfängern (46) dazu bestimmt ist, auf einer unteren Oberfläche der Haut des im Wesentlichen kegelstumpfförmigen Zwischenbereichs (22) angeordnet zu werden,

oder, wobei die oder jede Gruppe von Sendern (42) dazu bestimmt ist, auf einer unteren Oberfläche einer Haut eines im Wesentlichen kegelstumpfförmigen Zwischenbereichs (22) einer vorderen Spitze (16) des Luftfahrzeugs (10) angeordnet zu werden, wobei die oder jede Gruppe von Empfängern (46) dazu bestimmt ist, auf einer oberen Oberfläche der Haut des im Wesentlichen kegelstumpfförmigen Zwischenbereichs (22) angeordnet zu werden.

8. System (12) nach einem der vorherigen Ansprüche, **dadurch gekennzeichnet, dass** jeder Sender (42) durch eine bündig abstrahlende Antenne gebildet ist, die streifend sendet, wobei die Antenne kein bewegliches Element aufweist.

9. System (12) nach einem der vorherigen Ansprüche, wobei die Wellenform-Erzeugungsanordnung (48) geeignet ist, um gleichzeitig Wellenformen mit zeitlich konstant verschobenen Frequenzen für mehrere Sender (42) der Gruppe von Sendern (42) zu erzeugen.

10. System (12) nach einem der vorherigen Ansprüche, wobei die Wellenform-Erzeugungsanordnung (48) geeignet ist, für jeden Sender (42) ein frequenzmoduliertes periodisches Trägersignal mit einer periodischen Wellenform zu erzeugen, die während jeder Periode der Wellenform eine ansteigende und/oder abfallende Frequenz aufweist,

wobei gegebenenfalls die Erfassungsanordnung (50) geeignet ist, um ein Signal zu erzeugen, das für eine Frequenzdifferenz zwischen dem gesendeten Signal und dem empfangenen Signal zu jedem Zeitpunkt repräsentativ ist, wobei die Frequenzdifferenz zwischen dem gesendeten Signal und dem empfangenen Signal für die Zeitverschiebung zwischen dem gesendeten Signal und dem empfangenen Signal repräsentativ ist.

11. System (12) nach einem der vorherigen Ansprüche, wobei die Verarbeitungseinheit (32) eine Komponente (97A) zum Trennen in dem an jedem Empfänger (46) empfangenen Signal von dem von jedem Sender (42) gesendeten Signal, um das von jedem virtuellen Sender/Empfänger (54) empfangene Signal wiederherzustellen, und eine Komponente (97B) zum Filtern der von den virtuellen Sendern/Empfängern (54) empfangenen Signale abhängig von der Richtung in Bezug auf die Beobachtungsrichtung (D) umfasst, insbesondere abhängig von einer Peilung in Bezug auf die Beobachtungsrichtung (D).

12. System (12) nach einem der vorherigen Ansprüche, wobei das von der Verarbeitungseinheit (32) aus der Reflektivitätskarte rekonstruierte Bild des Geländes eine Landebahn umfasst, oder/und die aus der von der Verarbeitungseinheit (32) rekonstruierten Reflektivitätskarte erlangten Informationen Merkmale einer Landebahn sind, insbesondere ihre Kontur, ihre Schwelle oder/und ihre Achse.

13. Luftfahrzeug (10) mit einem System (12) zur verbesserten Sicht nach einem der Ansprüche 1 bis 12, wobei die Anzeige (34) in einem Cockpit des Luftfahrzeugs (10) angeordnet ist, wobei das Luftfahrzeug (10) einen im Wesentlichen kegelstumpfförmigen Zwischenbereich (22) der vorderen Spitze (16) aufweist, mindestens eine erste Gruppe, ausgewählt aus einer Gruppe von Sendern (42) und einer Gruppe von Empfängern (46), auf einer oberen Oberfläche einer Haut des kegelstumpfförmigen Zwischenbereichs (22) angeordnet ist, wobei eine zweite Gruppe, ausgewählt aus der Gruppe von Sendern (42) und der Gruppe von Empfängern (46), auf einer unteren Oberfläche der Haut des im Wesentlichen kegelstumpfförmigen Zwischenbereichs (22) angeordnet ist.

14. Verfahren zur verbesserten Sicht in einem Luftfahrzeug (10) umfassend die folgenden Schritte:

    - Bereitstellen eines Sichtsystems (12) nach einem der Ansprüche 1 bis 12;
    - Einspeisen, durch die Wellenform-Erzeugungsanordnung (48), von jedem Sender (42) der Gruppe von Sendern (42) und Erfassen, durch jeden Empfänger (46) der Gruppe von Empfängern (46), eines Signals, das nach Reflexion auf dem Feld gesendet wird;
    - Verarbeiten, durch die Verarbeitungseinheit (32), des gesendeten Signals und des empfangenen Signals, um die Signale zu erlangen, die auf dem virtuellen Sender/Empfänger-Netzwerk (54) empfangen werden, das sich entlang einer Erstreckungsrichtung (A) quer zu der Beobachtungsrichtung (D) erstreckt,
    - Rekonstruieren einer Reflektivitätskarte aus den Signalen, die über das virtuelle Sender/Empfänger-Netzwerk (54) empfangen werden;
    - Anzeigen, in einem Cockpit des Luftfahrzeugs (10), von Bildern des Geländes, die von der Verarbeitungseinheit (32) aus der Reflektivitätskarte rekonstruiert werden, oder von Informationen, die aus Bildern des Geländes erlangt werden, die von der Verarbeitungseinheit (32) aus der Reflektivitätskarte rekonstruiert werden.

**Claims**

1. Enhanced vision system (12) for an aircraft (10), comprising:

    - at least a vision sensor of a ground in an observation direction (D), the ground being located in front of and below the aircraft (10);
    - a processing unit (32) able to form a reflectivity map of the ground from data collected by the vision sensor;
    - a display (34) of ground images reconstituted by the processing unit (32) from the reflectivity map and/or of information characteristic of the ground, created by the processing unit (32) from the reflectivity map, the display (34) being intended to be placed in a cockpit of the aircraft (10);

wherein the vision sensor is an electromagnetic sensor (30) comprising a plurality of transmitters (42) of a transmitted signal, the transmitters (42) forming at least one group of transmitters (42), and a plurality of receivers (46) of a received signal, resulting from the transmitted signal following reflection off of the ground, the receivers (46) forming at least one group of receivers (46), the electromagnetic sensor (30) including a waveform generation assembly (48) powering each transmitter (42) in order to generate the transmitted signal and a assembly (50) to capture the signal received by each receiver (46) after reflection off of the ground,

    the transmitters (42) being distinct and spaced apart from the receivers (46), being arranged so as to form, from each combination of a transmitter (42) and of a receiver (46), between the group of transmitters (42) and the group of receivers (46), at least one virtual transmitters/receivers network (54) extending along an elongation direction (A) perpendicular to the observation direction (D),
    the linear density of virtual transmitters/receivers (54) in the network along the elongation direction (A) being greater than the linear density of transmitters (42) in the group of transmitters (42) along the elongation direction (A) and being greater than the linear density of receivers (46) in the group of receivers (46) along the elongation direction (A),
    **characterised in that** at least one group of transmitters (42) intended to be placed on one of an upper surface or a lower surface of a skin of a substantially frustoconical intermediate area (22) of a front tip (16) of the aircraft (10) and at least one group of receivers (46) to be placed on the other of the upper surface or the lower surface of the skin of the substantially frustoconical intermediate area (22).

2. System (12) according to claim 1, wherein the transmitters (42) are arranged at a first pitch n.P along the elongation direction (A) in the group of transmitters (42), the receivers (46) are arranged at a second pitch m.P along the elongation direction (A) in the group of receivers (46), the numbers n and m being prime to another integers, the network of virtual transmitters/receivers (54) formed from each combination of a transmitter (42) and a receiver (46) having a pitch P/2 along the elongation direction (A).

3. System (12) according to any one of the preceding claims, wherein the network of virtual transmitters/receivers (54) is arranged in a line or pseudo-line along the elongation direction (A).

4. System (12) according to any one of the preceding claims, wherein the electromagnetic sensor (30) includes a first group of transmitters (42) and at least one second group of transmitters (42), wherein the adjacent groups of transmitters (42) being separated by a gapped area (56) without transmitters (42) or receivers (46) in the gapped area (56),
and/or wherein the electromagnetic sensor (30) includes a first group of receivers (46) and at least one second group of receivers (46), the adjacent groups of receivers (46) being separated by a gapped area (56) without transmitters (42) and without receivers (46) in the gapped area (56),
wherein the network of virtual transmitters/receivers (54) includes a first subnet (58A) exclusively comprising virtual transmitter/receivers (54) resulting from interactions between a transmitter (42) of the first group of transmitters (42) and a receiver (46) of a group of receivers (46), and a second subnet (58B) exclusively including virtual transmitters/receivers (54) resulting from the interaction of a transmitter (42) of the second group of transmitters (42) and a receiver (46) of the same group of receivers (46), the first subnet (58A) of the network of virtual transmitters/receivers (54) extending as a continuation of the second subnet (58B) of the network of virtual transmitters/receivers (54),
or wherein the network of virtual transmitters/receivers (54) includes a first subnet (58A) exclusively comprising virtual transmitter/receivers (54) resulting from interactions between a transmitter (42) of one group of transmitters (42) and a receiver (46) of the first group of receivers (46), and a second subnet (58B) exclusively including virtual transmitters/receivers (54) resulting from the interaction of a transmitter (42) of the same group of transmitters (42) and a receiver (46) of the second group of receivers (46), the first subnet (58A) of the network of virtual transmitters/receivers (54) extending as a continuation of the second subnet (58B) of the network of virtual transmitters/receivers (54).

5. System (12) according to either of claims 4, wherein the vision sensor includes an optical sensor (36) arranged in the gapped area (56).

6. System (12) according to any one of the preceding claims, wherein the group of transmitters (42) is arranged along a line (40) of transmitters (42), in particular a curved line having a concavity, and the group of receivers (46) is arranged along a line (44) of receivers (46), in particular a curved line having a concavity.

7. System (12) according to any one of the preceding claims,
wherein the or each group of transmitters (42) is intended to be placed on an upper surface of a skin of a substantially frustoconical intermediate area (22) of a front tip (16) of the aircraft (10), the or each group of receivers (46) being intended to be placed on a lower surface of the skin of the substantially frustoconical intermediate area (22),
or wherein the or each group of transmitters (42) is intended to be placed on a lower surface of a skin of a substantially frustoconical intermediate area (22) of a front tip (16) of the aircraft (10), wherein the or each group of receivers (46) being intended to be placed on an upper surface of the skin of the substantially frustoconical intermediate area (22).

8. System (12) according to any one of the preceding claims, **characterised in that** each transmitter (42) is formed by a flush mount antenna that transmits by skimming, the antenna lacking any moving parts.

9. System (12) according to any one of the preceding claims, wherein the waveform generation assembly (48) is able to simultaneously generate waveforms at frequencies with a constant offset over time for several transmitters (42) of the group of transmitters (42).

10. System (12) according to any one of the preceding claims, wherein the waveform generation assembly (48) is able to generate a periodic frequency-modulated carrier signal with a periodic waveform having an increasing and/or decreasing frequency over each period of the waveform for each transmitter (42),
wherein the capture assembly (50) is able to generate a signal representative of a frequency difference between the transmitted signal and the received signal at all times, the frequency difference between the transmitted signal and the received signal being representative of the time lag between the transmitted signal and the received signal.

11. System (12) according to any one of the preceding claims, wherein the processing unit (32) includes a component (97A) for separating the transmitted signal by each transmitter (42) from the signal received on each receiver (46) in order to restore the signal received by each virtual transmitter/receiver (54), and a component (97B) for filtering the signals received by the virtual transmitters/receivers (54) depending on the direction relative to the observation direction (D), in particular depending on a bearing relative to the observation direction (D).

12. System (12) according to any one of the preceding claims, wherein the image of the ground restored by the processing unit (32) from the reflectivity map includes a runway, and/or the information obtained from the reflectivity map restored by the processing unit (32) are features of a runway, in particular its contour, threshold, and/or its axis.

13. Aircraft (10), including an enhanced vision system (12) according to any one of claims 1 to 12, the display (34) being arranged in a cockpit of the aircraft (10),

the aircraft (10) including a substantially frustoconical area (22) of a front tip (16), at least one first group selected from a group of transmitters (42) and a group of receivers (46) being placed on an upper surface of a skin of the frustoconical intermediate region (22), a second group selected from the group of transmitters (42) and the group of receivers (46) being placed on a lower surface of the skin of the substantially frustoconical intermediate area (22).

14. Method for enhanced vision in an aircraft (10), including the following steps:

- providing a vision system (12) according to any one of claim 1 to 12;
- powering each transmitter (42) of the group of transmitters (42) by the waveform generation assembly (48) and capturing, by each receiver (46) of the group of receivers (46), a transmitted signal following reflection off of the ground ;
- processing, by the processing unit (32), the transmitted signal and the received signal in order to obtain the signals received on the network of virtual transmitters/receivers (54) extending in an elongation direction (A) transverse to the observation direction (D),
- reconstituting a reflectivity map based on the signals received on the network of virtual transmitters/receivers (54);
- displaying, in a cockpit of the aircraft (10), images of the ground reconstituted by the processing unit (32) based on the reflectivity map or information obtained from ground images reconstituted by the processing unit (32) based on the reflectivity map (32).

FIG.1

## FIG.2

FIG.3

FIG.4

## FIG.5

**FIG.6**

FIG.7

EP 3 712 657 B1

**FIG.8**

ΔF

60A
60B
60C
60F
60E
60D

t

T

**FIG.9**

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2996522

**Littérature non-brevet citée dans la description**

- Radar imaging: Conventional and MIMO. **RANKIN G A et al.** COMMUNICATIONS AND ELECTRONICS (ICCE), 2012 FOUFITH INTERNATIONAL CONFERENCE ON. IEEE, 01 Août 2012, 171-176